# EUROPEAN PATENT APPLICATION

(11) **EP 4 033 438 A1**
(43) Date of publication of application: **27.07.2022**
(21) Application number: 20891050.5
(22) Date of filing: 20.08.2020
(51) Int. Cl.: G06Q 30/06

(54) **VIDEO GENERATION METHOD AND DEVICE, AND TERMINAL AND STORAGE MEDIUM**

(30) Priority: 18.11.2019 CN 201911125781
(71) Applicant: Beijing Wodong Tianjun Information Technology Co., Ltd., 100176 Beijing (CN); Beijing Jingdong Century Trading Co., Ltd., Beijing 100176 (CN)
(72) Inventor: FENG, Weiping, Beijing 100176 (CN)
(74) Representative: Prüfer & Partner mbB Patentanwälte · Rechtsanwälte
(86) International application number: PCT/CN2020/110278
(87) International publication number: WO 2021/098310

(57) **Abstract**

A video generation method and device, and a terminal and a storage medium. The method comprises: when a user accesses a commodity page, obtaining commodity attribute information corresponding to a commodity displayed on the commodity page, and determining a commodity display scene on the basis of the commodity attribute information (101); obtaining historical behavior data of the user, and obtaining commodity display data on the basis of the historical behavior data (102) ; obtaining a video template according to the commodity display scene and the commodity display data (103) ; and generating a commodity display video corresponding to the commodity on the basis of the commodity display data and the video template and sending the commodity display video to the customer (104) . According to the method and device, the terminal, and the storage medium, the operation pressure can be reduced, the generation efficiency of the commodity display video is high, and the method and device can be applied to different scenes; commodity display data and materials are obtained by real-time analysis, a video content and a commodity page can be ensured to be consistent, different commodity display videos can be generated for different users, accurate playing is implemented, and the satisfaction degree of the users is improved.

## Description

### CROSS-REFERENCE TO RELATED APPLICATIONS

This disclosure is based on and claims the priority to the Chinese patent application No. 201911125781.6 filed on November 18, 2019, the disclosure of which is hereby incorporated as a whole into the present disclosure.

### TECHNICAL FIELD

The present disclosure relates to the technical field of video processing, and particularly, to a video generation method, apparatus, terminal, and storage medium.

### BACKGROUND

Video is widely applied in fields such as e-commerce and content community, and compared with static graphic presentation, the video is more attractive to users and can improve perception and understanding of the users. It is greatly helpful in improving traffic, conversion rate, user return visit rate and the like of a website. However, when the video is applied in fields such as e-commerce, a variety of problems will occur.

### SUMMARY

Inventors of the present disclosure have found that there are drawbacks in the technical solution of video generation in the above related art: when the video is applied in the fields such as e-commerce, problems such as complex video synthesis, difficult updating, fixed video content will occur.

According to a first aspect of the present disclosure, there is provided a video generation method, comprising: when a user visits a product page, acquiring product attribute information corresponding to a product displayed on the product page, and determining a product display scene based on the product attribute information; acquiring history behavior data of the user, and obtaining product display data based on the history behavior data; acquiring a video template according to the product display scene and the product display data; and generating a product display video corresponding to the product based on the product display data and the video template.

In some embodiments, the product attribute information comprises: a product category and product feature information; and the determining a product display scene based on the product attribute information comprises: determining the product display scene matching the product category and the product feature information.

In some embodiments, the obtaining product display data based on the history behavior data comprises: determining a product display data category in which the user is interested according to the history behavior information; and extracting the product display data corresponding to the product display data category from the product page.

In some embodiments, the determining a product display data category in which the user is interested according to the history behavior information comprises: obtaining browsing times of the user for history product pages and click times for product information display regions in the history product pages; obtaining a click through rate of the user for each product information display region based on the click times and the browsing times; and determining a product information display region in which the user is interested based on the click through rate, and acquiring the product display data category corresponding to the product information display region in which the user is interested.

In some embodiments, the determining a product information display region in which the user is interested based on the click through rate comprises: ranking all the product information display regions in order of the click through rates from high to low; and selecting a plurality of product information display regions ranked on top in a result of the ranking, as the product information display regions in which the user is interested.

In some embodiments, the acquiring a video template according to the product display scene and the product display data comprises: judging whether a video template matching the product display scene and the product display data exists in a video template library; and if the video template exists, acquiring the video template; if the video template does not exist, acquiring a video template corresponding to the product display scene, adjusting the video template based on the product display data, obtaining the video template matching the product display scene and the product display data, and storing the video template in the video template library.

In some embodiments, the generating a product display video corresponding to the product based on the product display data and the video template comprises: acquiring a display material corresponding to the product display data, wherein the display material comprises: one or more of a video file, a sound file, an image file, and a text file; determining insertion positions of the product display data and/or the display material in the video template; and inserting the product display data and/or the display material into the corresponding insertion positions, generating the product display video and storing the product display video in a display video library.

In some embodiments, if it is judged that the display video library has therein stored a product display video matching the product display scene and the product display data, or has therein stored a product display video corresponding to the user and the product, the product display video is acquired from the display video library.

According to a second aspect of the present disclosure, there is provided a video generation apparatus, comprising: a display scene determination module configured to acquire, when a user visits a product page, product attribute information corresponding to a product displayed on the product page, and determine a product display scene based on the product attribute information; a display data determination module configured to acquire history behavior data of the user and obtain product display data based on the history behavior data; a video template acquisition module configured to acquire a video template according to the product display scene and the product display data; and a display video production module configured to generate a product display video corresponding to the product based on the product display data and the video template.

According to a third aspect of the present disclosure, there is provided a video generation apparatus, comprising: a memory; and a processor coupled to the memory, the processor being configured to perform, based on instructions stored in the memory, the method as described above.

According to a fourth aspect of the present disclosure, there is provided a terminal, comprising: the video generation apparatus as described above.

According to a fifth aspect of the present disclosure, there is provided a computer-readable storage medium having thereon stored computer instructions which, when executed by a processor, implement the method as described above.

### BRIEF DESCRIPTION OF THE DRAWINGS

In order to more clearly illustrate the embodiments of the present disclosure or technical solutions in related arts, the drawings used in the description of the embodiments or related arts will be briefly described below, it is obvious that the drawings in the description below are only some embodiments of the present disclosure, and for one of ordinary skill in the art, other drawings can be obtained according to the drawings without paying out inventive efforts.
Fig. 1 is a schematic flow diagram of a video generation method according to some embodiments of the present disclosure;
Fig. 2 is a schematic flow diagram of obtaining product display data in a video generation method according to some embodiments of the present disclosure;
Fig. 3A is a schematic flow diagram of determining a product display data category in which a user is interested in a video generation method according to some embodiments of the present disclosure;
Fig. 3B is a schematic diagram of acquiring product display data from a product page;
Fig. 4 is a schematic flow diagram of acquiring a video template in a video generation method according to some embodiments of the present disclosure;
Fig. 5 is a schematic flow diagram of generating a product display video in a video generation method according to some embodiments of the present disclosure;
Fig. 6 is a schematic block diagram of a video generation apparatus according to some embodiments of the present disclosure;
Fig. 7 is a schematic block diagram of a display data determination module in a video generation apparatus according to some embodiments of the present disclosure;
Fig. 8 is a schematic block diagram of a video generation apparatus according to other embodiments of the present disclosure.

### DETAILED DESCRIPTION

The present disclosure will be described more fully below with reference to the accompanying drawings, in which exemplary embodiments of the present disclosure are described. Technical solutions in the embodiments of the present disclosure will be described clearly and completely in conjunction with the drawings in the embodiments of the present disclosure, and it is obvious that the embodiments described are only some of the embodiments of the present disclosure, rather than all of the embodiments. All other embodiments, which are derived by one of ordinary skill in the art from the embodiments disclosed herein without making any inventive effort, shall fall within the protection scope of the present disclosure. The technical solutions of the present disclosure will be described in several aspects below in conjunction with the various drawings and embodiments.

In the related art known to inventors, when the video is applied in fields such as e-commerce, the following problems will occur: complex video synthesis: the video is recorded and edited by professionals, and thus needs preparing a large amount of materials and takes a long waiting time; difficult updating: once the video is confirmed and produced, if one wants to adjust and modify the video again, re-recording and synthesis are required, which is not applicable to "a scene requiring timely response"; fixed video content: all users view the same video, and it is unable to customize different videos according to different users; customization for scenes: only a small number of customized scenes can be supported, and large-scale and mass production of videos cannot be performed. Therefore, video use scenes are greatly limited.

In view of this, the embodiments of the present disclosure provide a video generation method, apparatus, terminal, and storage medium; the video generation method, apparatus, terminal and storage medium of the embodiments of the present disclosure, by generating a product display video based on product display data and a video template, can reduce operational pressure on a server and pressure on a communication network; can generate the product display video efficiently and can be applied to various scenes; by acquiring the product display data and material through real-time analysis, can ensure that video content is consistent with the product page, and can generate different product display videos for different users, to achieve accurate playing and improve user satisfaction.

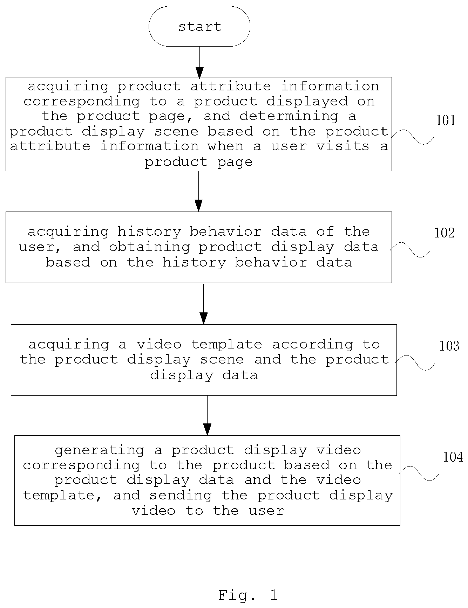

Fig. 1 is a flow diagram of a video generation method according to some embodiments of the present disclosure, as shown in Fig. 1:
step 101, acquiring product attribute information corresponding to a product displayed on the product page, and determining a product display scene based on the product attribute information, when a user visits a product page.

In some embodiments, the product page can be a product page of an e-commerce website, and the like, and the product can be mobile phone, wine, food, clothing, and the like. A terminal can be a mobile phone, a tablet computer and the like, and can visit the product page through an APP, a browser, an applet and the like installed in the terminal. The terminal can analyze a product webpage file to obtain product attribute information displayed on the product page, wherein the product attribute information comprises: a product category, product feature information, and the like; and the product feature information comprises information such as applicable users, applicable occasions, uses, prominent advantages of the product, and the like.

The product is combined with the product display scene, so that a better promotion effect can be achieved. The product display scene comprises a plot, main characters, and other characters of a story designed for the product, and a scene, atmosphere, etc., where the story takes place. The product display scene can be numbered. The product display scene can be determined on the terminal based on the product attribute information, and a product display scene number is determined. The product attribute information can also be sent to a background server, and the background server returns the product display scene number.

Step 102, acquiring history behavior data of the user, and obtaining product display data based on the history behavior data.

In some embodiments, the history behavior data comprises history data such as clicking, browsing webpages by the user. The product display data comprises: data such as product price, product specification, product discount, recommended product, product image, videos uploaded by users, and the like.

Step 103, acquiring a video template according to the product display scene and the product display data.

In some embodiments, the video template can be acquired on the terminal according to the product display scene and the product display data, or the product display scene information (product display scene number) and the product display data can be sent to the background server, and the background server sends the corresponding video template to the terminal.

Step 104, generating a product display video corresponding to the product based on the product display data and the video template. A video type of the product display video can be a variety of existing video types.

A display video library can be provided on the background server or a cloud server and the like, and is used for storing the product display video. The terminal can send a query request to the background server and the like, and if it is judged that the display video library has therein stored a product display video matching the product display scene and the product display data, or has therein stored a product display video corresponding to the user and the product, the product display video is acquired from the display video library. For example, the product display video is downloaded from the display video library to the terminal and played. If it is judged that the display video library does not have therein stored the product display video corresponding to the user and the product, a new product display video is generated by the terminal and played.

In some embodiments, the product display scene matching the product category and the product feature information is determined. For example, the product is a certain learning machine, its product category is a learning machine, and its product feature information comprises information: applicability to a middle school student and the like. Based on the product attribute information, it is determined that the product display scene is a scene where a middle school student is learning with the learning machine, a story plot of the product display scene is that when one middle school student encounters a lesson problem, the lesson problem is solved by using the learning machine, and a main character of the product display scene is the one middle school student, and so on. The product display scene and the product display scene number corresponding to the product attribute information can be preset, and the product display scene number can be taken as an unique identification of the product display scene.

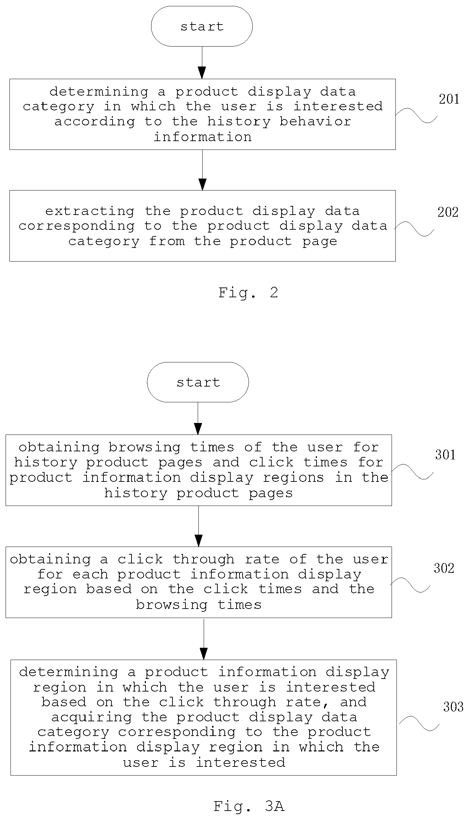

Various methods can be employed to obtain the product display data based on the history behavior data. Fig. 2 is a schematic flow diagram of obtaining product display data in a video generation method according to some embodiments of the present disclosure, as shown in Fig. 2:

step 201, determining a product display data category in which the user is interested according to the history behavior information. The product display data category comprises: data categories such as product price, product specification, product discount, recommended product, product image, videos uploaded by users, and the like.

Step 202, extracting the product display data corresponding to the product display data category from the product page.

In some embodiments, the product page can be analyzed, and data corresponding to the product display data category is extracted from the product page as the product display data. Various existing analysis methods can be employed to analyze the product page.

Various methods can be employed to determine the product display data category in which the user is interested according to the history behavior information. Fig. 3A is a schematic flow diagram of determining a product display data category in which the user is interested in a video generation method according to some embodiments of the present disclosure, as shown in Fig. 3A:

step 301, obtaining browsing times of the user for history product pages and click times for product information display regions in the history product pages.

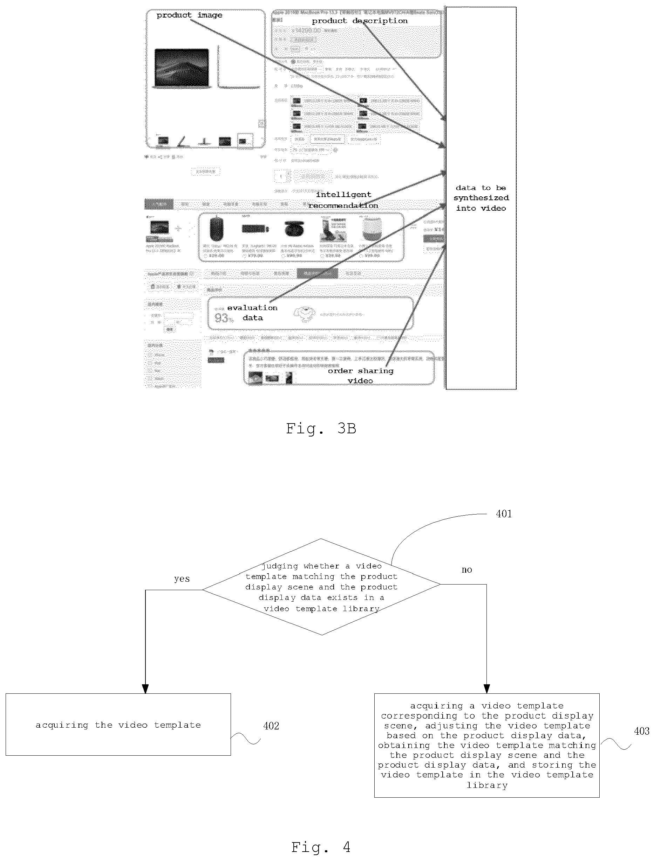

In some embodiments, the history product pages are product pages of a plurality of products that have been browsed by the user. The browsing times of the user for the history product pages and the click times for the product information display regions in the history product pages are acquired. As shown in Fig. 3B, the product information display regions comprise such regions in the product page as a product price region, a product specification region, a product discount region, a recommended-product region, a product image region, a region for videos uploaded by users.

Step 302, obtaining a click through rate of the user for each product information display region based on the click times and the browsing times.

For example, the terminal can acquire, from the background server, that browsing times of a user A for history product pages are 1000, and that click times of the user A for product price regions, product specification regions, and product discount regions in the history product pages are 200, 100, 500, respectively, and then it is determined that a click through rate of the user A for the product price regions is 200/1000=0.2, that a click through rate of the user A for the product specification regions is 100/1000=0.1, and that a click through rate of the user A for the product discount regions is 500/1000=0.5.

Step 303, determining a product information display region in which the user is interested based on the click through rate, and acquiring the product display data category corresponding to the product information display region in which the user is interested.

Various methods can be employed to determine the product information display region in which the user is interested based on the click through rate. For example, all product information display regions are ranked in order of the click through rates from high to low; and a plurality of product information display regions ranked on top are selected from a result of the ranking, as product information display regions in which the user is interested.

Various methods can be employed to acquire the video template according to the product display scene and the product display data. Fig. 4 is a schematic flow diagram of acquiring a video template in a video generation method according to some embodiments of the present disclosure, as shown in Fig. 4:
step 401, judging whether a video template matching the product display scene and the product display data exists in a video template library; and if the video template exists, the flow goes to step 402, and if the video template does not exist, the flow goes to step 403.

In some embodiments, the video template library is provided on the background server, cloud server, or the like. The terminal sends a query request (carrying the product display scene number, the product display data information, and the like) to the background server or cloud server and the like, and judges whether a video template matching the product display scene and the product display data exists in the video template library. The video template can be various existing video templates, and the video template can comprise distributions of various scenes, insertion positions of data, image, video and the like corresponding to the product, in video frames, and the like.

The video template is provided with corresponding template description information comprising: the product and the product display scene corresponding to the video template, the product display information that can be displayed by the video template, and the like. The server can judge whether the video template matching the product display scene and the product display data is stored according to the template description information.

Step 402, acquiring the video template. For example, the terminal can download the video template and the template description information from the video template library.

Step 403, acquiring a video template corresponding to the product display scene, adjusting the video template based on the product display data, obtaining the video template matching the product display scene and the product display data, and storing the video template in the video template library.

In some embodiments, a video template corresponding to the product display scene is preset in the video template library, and if it is determined that no video template matching the product display scene and the product display data exists in the video template library, the video template corresponding to the product display scene is adjusted. The adjusting the video template comprises increasing or decreasing the product display information and the like that can be displayed by the video template, and generating corresponding template description information, and various existing methods can be employed to adjust the video template. After the video template corresponding to the product display scene has been adjusted, the video template matching the product display scene and the product display data and the template description information are obtained and stored in the video template library.

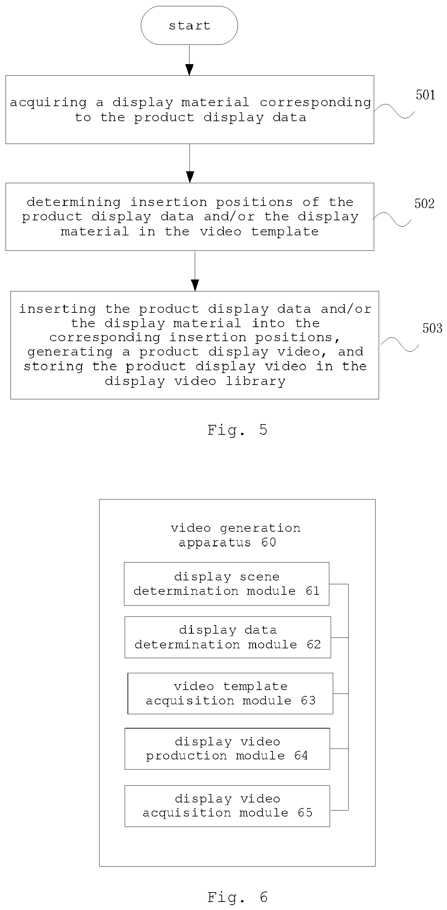

Various methods can be employed to generate the product display video corresponding to the product based on the product display data and the video template. Fig. 5 is a schematic flow diagram of generating a product display video in a video generation method according to some embodiments of the present disclosure, as shown in Fig. 5:
step 501, acquiring a display material corresponding to the product display data.

In some embodiments, the display material comprises: one or more of a video file, a sound file, an image file, and a text file. A material library can be provided on the background server or cloud server, the product display data can be product price, product specification, product discount, recommended product, product image, videos uploaded by users and the like, and the terminal can request the background server or cloud server to acquire, in the material library, video, sound, image or text and the like corresponding to one or more product display data, and return the same to the terminal. If there is no related material, the terminal uploads the related material to the material library.

Step 502, determining insertion positions of the product display data and/or the display material in the video template.

Step 503, inserting the product display data and/or the display material into the corresponding insertion positions, generating a product display video, and storing the product display video in the display video library.

In some embodiments, the video template has therein reserved insertion positions of the product display data or the display material or both. Based on the template description information of the video template, the product display data or the display material or both is inserted into the corresponding position, and the product display video is generated. A variety of existing methods can be employed to generate the video based on the video template. The product display video can be a Canvas video and the like, in which data, template and material are combined to display the video through Canvas animation. The animation is synthesized into a traditional video format and is uploaded to the video library.

The video generation method in the above embodiments, by generating the product display video on the terminal based on the product display data and the video template, can reduce the operational pressure on the server and the pressure on a communication network; can generate the product display video efficiently and can be applied to various similar scenes; by acquiring the product display data and material through real-time analysis, can ensure that the video content is consist with the product page and when the product page changes, the product display video correspondingly changes; can generate different product display videos for different users in conjunction with big data analysis, to achieve accurate playing and improve the user satisfaction; and by customizing the template and material, can meet a customized scene, and by storing the template and the material, can share them.

In some embodiments, as shown in Fig. 6, in the present disclosure, there is provided a video generation apparatus 60, comprising: a display scene determination module 61, a display data determination module 62, a video template acquisition module 63, a display video production module 64, and a display video acquisition module 65.

The display scene determination module 61, when a user visits a product page, acquires product attribute information corresponding to a product displayed on the product page, and determines a product display scene based on the product attribute information. The display data determination module 62 acquires history behavior data of the user, and obtains product display data based on the history behavior data. The video template acquisition module 63 acquires a video template according to the product display scene and the product display data. The display video production module 64 generates a product display video corresponding to the product based on the product display data and the video template.

In some embodiments, if it is determined that a display video library has therein stored a product display video matching the product display scene and the product display data, or has therein stored a product display video corresponding to the user and the product, the display video acquisition module 65 acquires the product display video from the display video library.

The product attribute information comprises: a product category, product feature information, and the like; and the display scene determination module 61 determines the product display scene matching the product category and the product feature information. The video template acquisition module 63 judges whether a video template matching the product display scene and the product display data exists in the video template library; if the video template exists, the video template acquisition module 63 acquires the video template; and if the video template does not exist, the video template acquisition module 63 acquires a video template corresponding to the product display scene, and adjusts the video template based on the product display data, and the video template acquisition module 63 obtains the video template matching with the product display scene and the product display data and stores the video template in the video template library.

The display video production module 64 acquires a display material corresponding to the product display data, wherein the display material comprises: one or more of a video file, a sound file, an image file, and a text file. The display video production module 64 determines insertion positions of the product display data and/or the display material in the video template, inserts the product display data and/or the display material into the corresponding insertion positions, generates the product display video, and stores the product display video in the display video library.

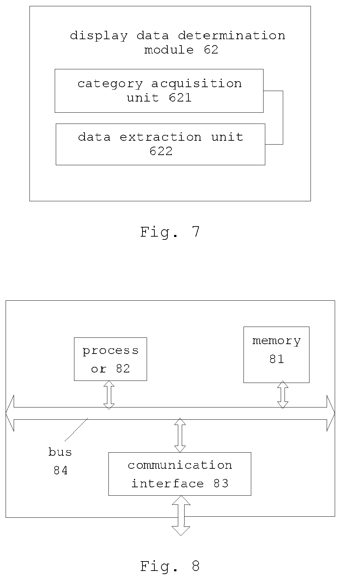

In some embodiments, as shown in Fig. 7, the display data determination module 62 comprises: a category acquisition unit 621 and a data extraction unit 622. The category acquisition unit 621 determines a product display data category in which the user is interested according to the history behavior information. The data extraction unit 622 extracts the product display data corresponding to the product display data category from the product page.

The category acquisition unit 621 obtains browsing times of the user for history product pages and click times for product information display regions in the history product pages . The category acquisition unit 621 obtains a click through rate of the user for each product information display region based on the click times and the browsing times. The category acquisition unit 621 determines a product information display region in which the user is interested based on the click through rate, and acquires the product display data category corresponding to the product information display region in which the user is interested.

For example, the category acquisition unit 621 ranks the product information display regions in order of the click through rates from high to low, and selects a plurality of product information display regions ranked on top from the result of the ranking, as product information display regions in which the user is interested.

Fig. 8 is a block schematic diagram of a video generation apparatus according to other embodiments of the present disclosure. As shown in Fig. 8, the apparatus can comprise a memory 81, a processor 82, a communication interface 83, and a bus 84. The memory 81 is used for storing instructions, the processor 82 is coupled to the memory 81, and the processor 82 is configured to implement, based on the instructions stored in the memory 81, the video generation method described above.

The memory 81 can be a high-speed RAM memory, a non-volatile memory, and the like, and the memory 81 can also be a memory array. The memory 81 can also be partitioned into blocks, and the blocks can be combined into virtual volumes according to a certain rule. The processor 82 can be a central processing unit CPU, or an Application Specific Integrated Circuit (ASIC), or one or more integrated circuits configured to implement the video generation methods of the present disclosure.

In some embodiments, the present disclosure provides a terminal, comprising the video generation apparatus in any of the above embodiments. The terminal can be a mobile phone, a tablet computer and the like.

In some embodiments, the present disclosure provides a computer-readable storage medium having thereon stored computer instructions which, when executed by a processor, implement the video generation method in any of the above embodiments.

It should be appreciated by those skilled in the art, the embodiments of the present disclosure can be provided as a method, system, or computer program product. Accordingly, the present disclosure can take a form of an entire hardware embodiment, an entire software embodiment or an embodiment combining software and hardware aspects . Moreover, the present disclosure can take a form of a computer program product implemented on one or more computer-available non-transitory storage media (comprising, but not limited to, a disk memory, CD-ROM, optical memory, and the like) having therein contained computer-available program code.

The present disclosure is described with reference to the flow diagrams and/or block diagrams of the method, device (system) and computer program product according to the embodiments of the present disclosure. It should be understood that each flow and/or block in the flow diagram and/or block diagram, and a combination of flows and/or blocks in the flow diagram and/or block diagram, can be implemented by computer program instructions. These computer program instructions can be provided to a processor of a general-purpose computer, special-purpose computer, embedded processor, or other programmable data processing device to produce a machine, such that the instructions, which are executed through the processor of the computer or other programmable data processing device, create means for implementing a function specified in one or more flows of the flow diagram and/or one or more blocks in the block diagram.

These computer program instructions can also be stored in a computer-readable memory that can guide a computer or other programmable data processing device to work in a specific way, such that the instructions stored in the computer-readable memory produce an article of manufacture comprising instruction means which implement a function specified in one or more flows of the flow diagram and/or one or more blocks in the block diagram.

These computer program instructions can also be loaded onto a computer or other programmable data processing device, such that a series of operation steps are performed on the computer or other programmable device to produce computer-implemented processing, and therefore, the instructions, which are executed on the computer or other programmable device, provide steps configured to implement a function specified in one or more flows of the flow diagram and/or one or more blocks in the block diagram.

The video generation method, apparatus, terminal and storage medium provided in the above embodiments, by generating the product display video on the terminal based on the product display data and the video template, can reduce the operational pressure on the server and the pressure on the communication network; can generate the product display video efficiently and can be applied to various similar scenes; by acquiring the product display data and material through real-time analysis, can ensure that the video content is consistent with the product page and when the product page changes, the product display video correspondingly changes; can generate different product display videos for different users in conjunction with big data analysis, to achieve accurate playing and improve the user satisfaction; and by customizing the template and the material, can meet the customized scene and achieve the sharing of the stored template and material.

The description of the present disclosure has been presented for purposes of illustration and description, and is not intended to be exhaustive or limit the present disclosure to the disclosed form. Many modifications and variations are apparent to one of ordinary skill in the art. The embodiments are selected and described to better explain the principles and the practical application of the present disclosure, and to enable one of ordinary skill in the art to understand the present disclosure so as to design various embodiments suitable for a specific purpose and having various modifications.

## Claims

1. A video generation method, comprising:
acquiring product attribute information corresponding to a product displayed on the product page, and determining a product display scene based on the product attribute information, when a user visits a product page;
acquiring history behavior data of the user, and obtaining product display data based on the history behavior data;
acquiring a video template according to the product display scene and the product display data; and
generating a product display video corresponding to the product based on the product display data and the video template.

2. The method according to claim 1, wherein the product attribute information comprises: a product category and product feature information; and the determining a product display scene based on the product attribute information comprises:
determining the product display scene matching the product category and the product feature information.

3. The method according to claim 2, wherein the obtaining product display data based on the history behavior data comprises:
determining a product display data category in which the user is interested according to the history behavior information; and
extracting the product display data corresponding to the product display data category from the product page.

4. The method according to claim 3, wherein the determining a product display data category in which the user is interested according to the history behavior information comprises:
obtaining browsing times of the user for history product pages and click times for product information display regions in the history product pages;
obtaining a click through rate of the user for each product information display region based on the click times and the browsing times; and
determining a product information display region in which the user is interested based on the click through rate, and acquiring the product display data category corresponding to the product information display region in which the user is interested.

5. The method according to claim 4, wherein the determining a product information display region in which the user is interested based on the click through rate comprises:
ranking all the product information display regions in order of the click through rates from high to low; and
selecting a plurality of product information display regions ranked on top in a result of the ranking, as product information display regions in which the user is interested.

6. The method according to claim 1, wherein the acquiring a video template according to the product display scene and the product display data comprises:
judging whether a video template matching the product display scene and the product display data exists in a video template library; and
acquiring the video template if the video template exists; if the video template does not exist, acquiring a video template corresponding to the product display scene, adjusting the video template based on the product display data, obtaining the video template matching the product display scene and the product display data, and storing the video template in the video template library.

7. The method according to claim 1, wherein the generating a product display video corresponding to the product based on the product display data and the video template comprises:
acquiring a display material corresponding to the product display data, wherein the display material comprises: one or more of a video file, a sound file, an image file, and a text file;
determining insertion positions of the product display data and/or the display material in the video template; and
inserting the product display data and/or the display material into the corresponding insertion positions, generating the product display video and storing the product display video in a display video library.

8. The method according to claim 7, further comprising:
acquiring the product display video from the display video library if it is judged that the display video library has therein stored a product display video matching the product display scene and the product display data, or has therein stored a product display video corresponding to the user and the product.

9. A video generation apparatus, comprising:
a display scene determination module configured to acquire, when a user visits a product page, product attribute information corresponding to a product displayed on the product page, and determine a product display scene based on the product attribute information;
a display data determination module configured to acquire history behavior data of the user and obtain product display data based on the history behavior data;
a video template acquisition module configured to acquire a video template according to the product display scene and the product display data; and
a display video production module configured to generate a product display video corresponding to the product based on the product display data and the video template.

10. A video generation apparatus, comprising:
a memory; and a processor coupled to the memory, the processor being configured to perform, based on instructions stored in the memory, the method according to any of claims 1 to 8.

11. A terminal, comprising:
the video generation apparatus according to claim 9 or 10.

12. A computer-readable storage medium having thereon stored computer instructions which, when executed by a processor, implement the method according to any of claims 1 to 8.
